# EUROPEAN PATENT APPLICATION

(11) **EP 4 395 025 A1**
(43) Date of publication of application: **03.07.2024**
(21) Application number: 22953379.9
(22) Date of filing: 08.11.2022
(51) Int. Cl.: H01M 50/15, H01M 50/176, H01M 50/184, H01M 50/188, H01M 50/193

(54) **METHOD FOR PRODUCING COVER FOR AIRTIGHT CONTAINERS**

(71) Applicant: Mutsuki Electric Co., Ltd., Osaka-shi, Osaka 544-0004 (JP)
(72) Inventor: SAI, Seiichi, Osaka-shi, Osaka 544-0004 (JP)
(74) Representative: Wallinger Ricker Schlotter Tostmann
(86) International application number: PCT/JP2022/041587
(87) International publication number: WO 2024/100772

(57) **Abstract**

To provide a method for manufacturing a sealed container lid capable of attaching an terminal to a lid body while securing sealing properties and insulation properties.

A method for manufacturing a sealed container lid of the present invention includes a first arrangement step of arranging an insulating flange 42 so as to overlap with a terminal flange 32, a first heating step of heating the insulating flange 42 overlapping with the terminal flange 32, a first joining step of pressing the insulating flange 42 on the terminal flange 32 in a state where a pair of pressure portions 55, 56 sandwich the terminal flange 32 and the heated insulating flange 42, and joining the insulating flange 42 to the terminal flange 32, a second arrangement step of arranging the insulating flange 42 so as to overlap with a lid body 15, a second heating step of heating the insulating flange 42 overlapping with the lid body 15, and a second joining step of pressing the insulating flange 42 on the lid body 15 in a state where the pair of pressure portions 55, 56 sandwich the lid body 15 and the heated insulating flange 42, and joining the insulating flange 42 to the lid body 15.

## Description

### Technical Field

The present invention relates to a method for manufacturing a sealed container lid.

### Background Art

It is necessary to provide, in a lid of a sealed container forming an outer shell of a sealed battery or a capacitor, an insulating member between a lid body and a terminal that penetrates the lid body, and to attach the terminal to the lid body while securing sealing properties and insulation properties. It is necessary to draw out the terminal from an electrode body housed inside a case to the outside of the case.

Patent Literature 1 discloses providing an insulating member between a lid body and a terminal by caulking and fixing the terminal. Patent Literature 2 discloses providing an insulating member between a lid body and a terminal by injection molding. Patent Literature 3 discloses, after a terminal is caulked and fixed in a state where an insulating member is arranged between a lid body and the terminal, providing an insulating member between the lid body and the terminal by heating and melting the insulating member.

### Citation List

### Patent Literature

PTL 1: JP2013-105538A
PTL 2: JP2021-86813A
PTL 3: JP2009-104971A

### Summary of Invention

### Technical Problem

When the insulating member is provided by caulking and fixing as in PTL 1, variations in caulking amount tend to occur, and there is a danger that the insulating member does not exhibit sufficient sealing performance.

When the insulating member is provided by injection molding as in PTL 2, there is a danger that joining strength between the insulating member and the lid body or the terminal is not sufficient according to the shape or the like of the insulating member. In addition, since a mold is required for injection molding, it is difficult to deal with small-lot production.

When the insulating member is heated and melted after the terminal is caulked and fixed as in PTL 3, the insulating member is heated in a state where the insulating member is pressured by caulking and fixing; therefore, the insulating member may be deformed during the heating and it may be difficult to secure an insulation distance. Moreover, when the insulating member is heated in the pressured state, a melted resin of the insulating member is pushed out of an interface between the lid body and the insulating member or an interface between the terminal and the insulating member, and the insulating member is joined to the lid body and the terminal in a state where little amount of melted resin exists on the interface. Therefore, it may be difficult to obtain desired sealing performance and joining strength by the method of PTL 3.

Here, an object is to provide a method for manufacturing a sealed container lid capable of attaching an terminal to a lid body while securing sealing properties and insulation properties without using a mold for injection molding.

### Solution to Problem

According to the embodiment, aspects of the following [1] to [10] are provided.
[1] In a method for manufacturing a sealed container lid that includes a conductive lid body having a terminal mounting hole, a conductive terminal having a shaft portion inserted into the terminal mounting hole, and a terminal flange protruding from an outer peripheral surface of the shaft portion, and an insulating member formed of an insulating thermoplastic resin and having a cylindrical portion into which the terminal is inserted, and an insulating flange protruding from an outer peripheral surface of the cylindrical portion and sandwiched between the lid body and the terminal flange, the method includes a first arrangement step of arranging the insulating flange so as to overlap with the terminal flange, a first heating step of heating the insulating flange overlapping with the terminal flange, a first joining step of, after heating the insulating flange, pressing the insulating flange on the terminal flange in a state where a pair of pressure portions sandwich the terminal flange and the heated insulating flange, and joining the insulating flange to the terminal flange, a second arrangement step of arranging the insulating flange so as to overlap with the lid body, a second heating step of heating the insulating flange overlapping with the lid body, and a second joining step of, after heating the insulating flange, pressing the insulating flange on the lid body in a state where the pair of pressure portions sandwich the lid body and the heated insulating flange, and joining the insulating flange to the lid body.
[2] The method for manufacturing the sealed container lid according to the above [1], in which the insulating flange is heated by heating the terminal flange in the first heating step, and the insulating flange is heated by heating the lid body in the second heating step.
[3] The method for manufacturing the sealed container lid according to the above [2], in which the lid body and the terminal flange are heated by induction heating.
[4] The method for manufacturing the sealed container lid according to any one of the above [1] to [3], in which, in the first joining step, the pair of pressure portions are moved to be close to each other so that a distance between the pair of pressure portions is a predetermined length, the terminal flange and the insulating flange are sandwiched by the pair of pressure portions, and a pressure acting on the insulating flange at that time is measured.
[5] The method for manufacturing the sealed container lid according to any one of the above [1] to [4], in which, in the second joining step, the pair of pressure portions are moved to be close to each other so that a distance between the pair of pressure portions is a predetermined length, the lid body and the insulating flange are sandwiched by the pair of pressure portions, and a pressure acting on the insulating flange at that time is measured.
[6] The method for manufacturing the sealed container lid according to any one of the above [1] to [5], in which the shaft portion has a hollow portion opening to one end in an axial direction, and the pair of pressure portions are moved to be close to each other, a protrusion provided in one of the pair of pressure portions is inserted into the hollow portion from the opening to press the shaft portion onto an inner peripheral surface of the terminal mounting hole, and the cylindrical portion is pressured by the shaft portion and the terminal mounting hole in the first joining step.
[7] The method for manufacturing the sealed container lid according to the above [6], in which the protrusion has a tapered shape, and, when the protrusion is inserted into the hollow portion from the opening, the protrusion presses the shaft portion on the inner peripheral surface of the terminal mounting hole.
[8] The method for manufacturing the sealed container lid according to the above [6], in which the inner peripheral surface of the hollow portion has a tapered shape in which a diameter becomes large as coming close to an opening end, and, when the protrusion is inserted into the hollow portion from the opening, the protrusion presses the shaft portion on the inner peripheral surface of the terminal mounting hole.
[9] The method for manufacturing the sealed container lid according to any one of the above [1] to [8], in which a tip end of the cylindrical portion is on the same plane as an outer surface of the lid body or protrudes to an outer side than the outer surface of the lid body.
[10] In a method for manufacturing a sealed container lid that includes a conductive lid body having a terminal mounting hole, a conductive terminal having a shaft portion inserted into the terminal mounting hole, and a terminal flange protruding from an outer peripheral surface of the shaft portion, and an insulating member formed of an insulating thermoplastic resin and having a cylindrical portion into which the terminal is inserted, and an insulating flange protruding from an outer peripheral surface of the cylindrical portion and sandwiched between the lid body and the terminal flange, the method includes an arrangement step of arranging the insulating flange between the lid body and the terminal flange, a heating step of heating the insulating flange arranged between the lid body and the terminal flange, and a joining step of, after heating the insulating flange, joining the lid body and the terminal flange to the insulating flange in a state where a pair of pressure portions sandwich the lid body, the heated insulating flange, and the terminal flange, and fixing the terminal to the lid body.

### Advantageous Effects of Invention

According to the method for manufacturing the sealed container lid, the insulating flange is pressured by the lid body and the terminal flange in the state where the insulating flange is heated; therefore, the sealed container lid having sealing properties and insulation properties can be efficiently manufactured.

### Brief Description of Drawings

[FIG. 1] FIG. 1 is a cross-sectional view showing an example of a sealed container manufactured in a first embodiment.
[FIG. 2] FIG. 2 is a main-part enlarged view of FIG. 1.
[FIG. 3] FIG. 3 is a view schematically showing a joining device.
[FIG. 4] FIG. 4 is a block diagram showing an electric configuration of the joining device.
[FIG. 5] FIG. 5 is an example of a flowchart for a lid assembly step.
[FIG. 6A] FIG. 6A is a view schematically showing a surface treatment step in the first embodiment.
[FIG. 6B] FIG. 6B is a view schematically showing a first arrangement step in the first embodiment.
[FIG. 6C] FIG. 6C is a schematic diagram of the joining device performing a first heating step in the first embodiment.
[FIG. 6D] FIG. 6D is a schematic diagram of the joining device performing a first joining step in the first embodiment.
[FIG. 6E] FIG. 6E is a view schematically showing a second arrangement step in the first embodiment.
[FIG. 6F] FIG. 6F is a schematic diagram of the joining device performing a second heating step in the first embodiment.
[FIG. 6G] FIG. 6G is a schematic diagram of the joining device performing a second joining step in the first embodiment.
[FIG. 7A] FIG. 7A is a schematic diagram showing a joining device of a modification example of the first embodiment.
[FIG. 7B] FIG. 7B is a schematic diagram showing a joining device of another modification example of the first embodiment.
[FIG. 8] FIG. 8 is a cross-sectional view showing an example of a sealed container lid manufactured in a second embodiment.
[FIG. 9A] FIG. 9A is a view schematically showing a surface treatment step in the second embodiment.
[FIG. 9B] FIG. 9B is a view schematically showing a first arrangement step in the second embodiment.
[FIG. 9C] FIG. 9C is a schematic diagram of a joining device performing a first heating step in the second embodiment.
[FIG. 9D] FIG. 9D is a schematic diagram of the joining device performing a first joining step in the second embodiment.
[FIG. 9E] FIG. 9E is a view schematically showing a second arrangement step in the second embodiment.
[FIG. 9F] FIG. 9F is a schematic diagram of the joining device performing a second heating step in the second embodiment.
[FIG. 9G] FIG. 9G is a schematic diagram of the joining device performing a second joining step in the second embodiment.
[FIG. 10] FIG. 10 is an example of a flowchart for a lid assembly step.
[FIG. 11A] FIG. 11A is a view schematically showing an arrangement step in a third embodiment.
[FIG. 11B] FIG. 11B is a schematic diagram of a joining device performing a heating step in the third embodiment.
[FIG. 11C] FIG. 11C is a schematic diagram of the joining device performing a joining step in the third embodiment.

### Description of Embodiments

Hereinafter, embodiments of the present invention will be explained with reference to the drawings. In the drawings, the size or the like of members may be expressed in an exaggerated manner for explanation. The present invention is not limited to the following embodiments. The following embodiments are provided by way of example and are not intended to limit the scope of the invention. The novel embodiments can be implemented in other various manners, and various omissions, substitutes, and modifications may occur within a scope not departing from the spirit of the invention.

### (First Embodiment)

Hereinafter, a first embodiment of the present invention will be explained with reference to the drawings.

### (1) Structure of Sealed Container Lid 19

First, an example of a sealed container lid 19 manufactured by a manufacturing method of the embodiment will be explained. The sealed container lid 19 constitutes a sealed container 10 with a case body 11, which is used for a sealed battery, an electric double layer capacitor, and the like.

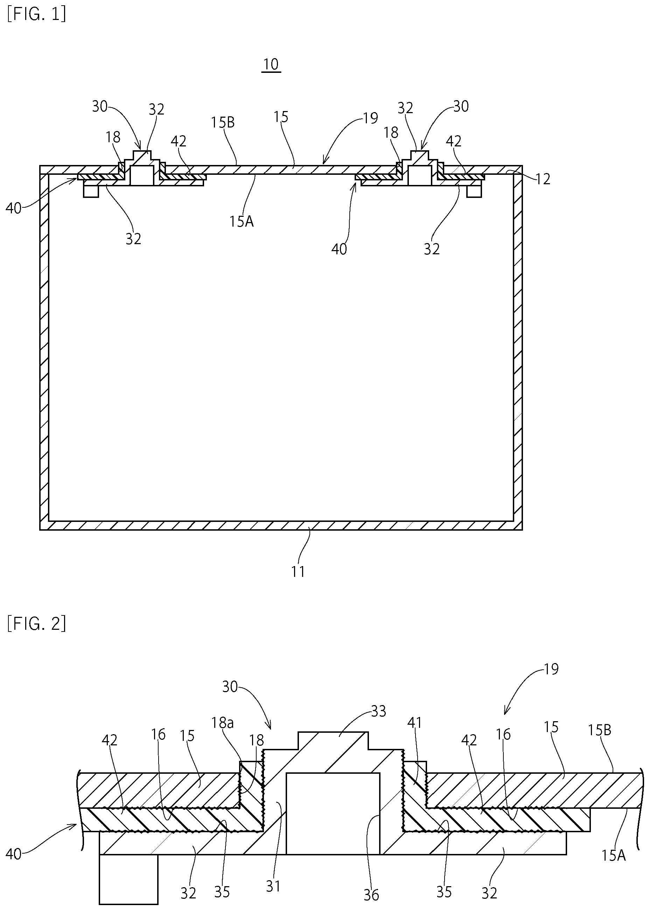

As shown in FIG. 1, the sealed container lid 19 includes a lid body 15, a terminal 30 that penetrates the lid body 15, and an insulating member 40 provided between the lid body 15 and the terminal 30. In the sealed container lid 19, the terminal 30 is attached to the lid body 15 while securing sealing properties and insulation properties by the insulating member 40. The sealed container lid 19 closes an opening 12 provided at the case body 11.

The lid body 15 is a plate-shaped member fitted to the opening 12 of the case body 11. The lid body 15 is welded to a peripheral edge of the opening 12 of the case body 11. The lid body 15 is formed of a metal having conductivity such as aluminum, copper, an aluminum alloy, or a copper alloy. The lid body 15 has an inner surface 15A facing an interior side of the sealed container 10 and an outer surface 15B facing an exterior side.

The lid body 15 also has terminal mounting holes 18 that penetrate through the inner surface 15A and the outer surface 15B. Two terminal mounting holes 18 are provided in the lid body 15. The inside and the outside of the sealed container 10 communicate with each other through the terminal mounting holes 18.

As shown in FIG. 2, a treatment portion 16 to which surface treatment is performed is provided on the inner surface 15A of the lid body 15 so as to surround the terminal mounting hole 18. As the surface treatment applied to the treatment portion 16, for example, surface roughening treatment, silane coupling treatment, treatment of attaching a heat fusion tape, and the like can be cited. As the surface roughening treatment, the surface can be roughened by physical treatment such as sandblasting treatment, liquid honing treatment, and laser-processing treatment, or chemical treatment such as anodizing treatment, immersion to treatment liquid containing a base or an acid, and etching process; however, it is preferable that the surface is roughened by physical treatment, and it is more preferable that the surface is roughened by laser-processing treatment. Note that the treatment portion 16 may be provided not only on the inner surface 15A of the lid body 15 but also on an inner peripheral surface of the terminal mounting hole 18.

The sealed container lid 19 is a component in which the lid body 15, the terminal 30, and the insulating member 40 are integrally assembled in a state where the insulating member 40 is disposed between the terminal 30 inserted into the terminal mounting hole 18 and the lid body 15.

One part of the terminal 30 is disposed inside the sealed container 10 and the other part thereof is disposed outside the sealed container 10 so as to extend from the inside of the sealed container 10 through the terminal mounting hole 18. The terminal 30 is formed of a metal having conductivity such as aluminum, copper, an aluminum alloy, or a copper alloy. As shown in FIG. 2, the terminal 30 has a shaft portion 31, a terminal flange 32, and an external connection portion 33.

The shaft portion 31 is inserted into the terminal mounting hole 18 with a clearance for arranging the insulating member 40. One end of the shaft portion 31 is disposed inside the sealed container 10 and the other end is arranged outside the sealed container 10. The terminal flange 32 is provided at one end (an end on the interior side of the sealed container 10) of the shaft portion 31. In the embodiment, a hollow portion 36 opening to one end (the interior side of the sealed container 10) in an axial direction is provided in the shaft portion 31.

The terminal flange 32 protrudes from an outer peripheral surface of the shaft portion 31. The terminal flange 32 is opposed to the inner surface 15A of the lid body 15 with a clearance at a peripheral edge of the terminal mounting hole 18. In the terminal flange 32, a treatment portion 35 to which surface treatment is performed is provided on a surface opposed to the inner surface 15A of the lid body 15 so as to surround the shaft portion 31 is provided. As the surface treatment applied to the terminal flange 32, for example, surface roughening treatment, silane coupling treatment, treatment of attaching the heat fusion tape, and the like can be cited. As the surface roughening treatment, the surface can be roughened by physical treatment such as sandblasting treatment, liquid honing treatment, and laser-processing treatment, or chemical treatment such as anodizing treatment, immersion to treatment liquid containing a base or an acid, and etching process; however, it is preferable that the surface is roughened by physical treatment, and it is more preferable that the surface is roughened by laser-processing treatment. Note that the treatment portion 35 may be provided not only on the terminal flange 32 but also on an outer peripheral surface of the shaft portion 31.

The external connection portion 33 is provided with a size enough to be inserted into the terminal mounting hole 18, and is disposed so as to protrude to an outer side of the sealed container 10 than the outer surface 15B of the lid body 15.

The insulating member 40 has a cylindrical portion 41 and an insulating flange 42. The cylindrical portion 41 is inserted into the terminal mounting hole 18. One end of the cylindrical portion 41 is disposed inside the sealed container 10. The other end of the cylindrical portion 41 is preferably on the same plane as the outer surface 15B of the lid body 15 or protrudes to the outer side than the outer surface 15B of the lid body 15 so as to cover an edge portion 18a on the outer surface 17 side of the terminal mounting hole 18 provided in the lid body 15 (refer to FIG. 2). The insulating flange 42 protrudes from an outer peripheral surface of the cylindrical portion 41 inside the sealed container 10.

A hollow part of the cylindrical portion 41 opens to the interior side and the exterior side of the sealed container 10. The shaft portion 31 of the terminal 30 is inserted into the hollow part of the cylindrical portion 41. Namely, the cylindrical portion 41 is sandwiched between the lid body 15 and the shaft portion 31 of the terminal 30 in the terminal mounting hole 18.

The insulating flange 42 is sandwiched between the inner surface 15A of the lid body 15 and the terminal flange 32 of the terminal 30 at the peripheral edge of the terminal mounting hole 18.

The insulating member 40 is provided between the lid body 15 and the terminal 30 in the above manner to thereby seal between the lid body 15 and the terminal 30 in a state where the lid body 15 and the terminal 30 are insulated from each other. The insulating member 40 also fixes the terminal 30 to the lid body 15.

It is preferable that the insulating flange 42 contacts the treatment portion 16 provided on the inner surface 15A of the lid body 15 and contacts the treatment portion 35 provided on the terminal flange 32 of the terminal 30. The insulating flange 42 contacts the lid body 15 and the terminal 30 at the treatment portions 16, 35 to which the surface treatment is performed, thereby firmly joining the insulating flange 42 to the lid body 15 and the terminal 30 while preventing liquid or gas from flowing to/from the inside and the outside of the sealed container 10.

The insulating member 40 is formed of an insulating thermoplastic resin such as PFA (perfluoroalkoxyethylene), PPS (polyphenylenesulfide), PBT (polybutylene terephthalate), and PP (polypropylene). The insulating member 40 may be formed of a material having moldability, insulation properties, sealing properties, and resistance to a substance to be stored in the sealed container 10, and the material is not limited to PFA, PPS, PBT and PP. Moreover, a filler may be added to the insulating member 40 in addition to the above thermoplastic resin according to need.

### (2) Method for Manufacturing Sealed Container Lid 19

Next, a method for manufacturing the sealed container lid 19 will be explained. The method for manufacturing the sealed container lid 19 includes a preparation step and a lid assembly step, and the sealed container lid 19 is manufactured through these steps. In the preparation step, respective members used for the sealed container lid 19 are prepared. In the lid assembly step, the lid body 15, the terminal 30, and the insulating member 40 are integrally assembled to fabricate the sealed container lid 19.

Note that the manufactured sealed container lid 19 is arranged so as to close the opening 12 of the case body 11 that stores a substance to be stored thereinside. Then, a peripheral edge of the opening 12 of the case body 11 and an outer peripheral edge of the lid body 15 of the sealed container lid 19 are irradiated with laser, thereby welding the case body 11 and the sealed container lid 19 together to manufacture the sealed container 10.

The method for manufacturing the sealed container lid 19 of the embodiment is characterized in the lid assembly step, and a well-known manufacturing method can be applied to another step (preparation step).

### (3) Joining Device 50

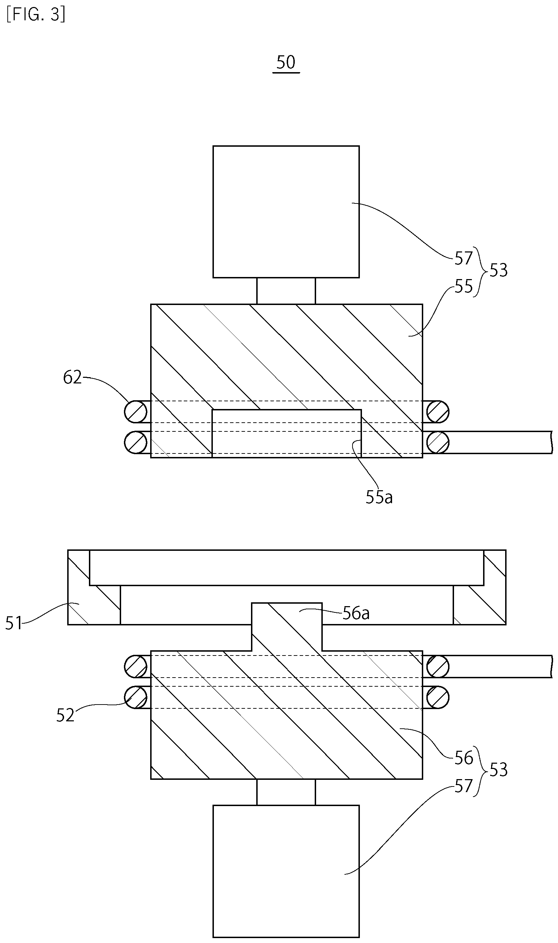

First, a joining device 50 used in the lid assembly step of the embodiment will be explained chiefly with reference to FIG. 3, FIG. 4, and FIGS. 6B to 6G.

The joining device 50 includes a stage 51, heating devices 52, 62, a press device 53, and a control device 54.

On the stage 51, laminated bodies L1, L2 are placed. The laminated body L1 is formed by inserting the shaft portion 31 into the cylindrical portion 41 of the insulating member 40 to allow the terminal flange 32 of the terminal 30 to overlap with the insulating flange 42 of the insulating member 40. The laminated body L2 is formed by inserting the cylindrical portion 41 and the shaft portion 31 into the terminal mounting hole 18 of the lid body 15 to allow the lid body 15, the insulating member 40, and the terminal 30 to be laminated from top to bottom sequentially so that the insulating flange 42 of the insulating member 40 is placed between the inner surface 15A of the lid body 15 and the terminal flange 32 of the terminal 30.

The heating devices 52, 62 has induction heating coils connected to a power supply device. When a driving power is inputted from the power supply device, magnetic fields are produced from the induction heating coils to induction-heat the lid body 15 and the terminal 30 in the laminated bodies L1, L2 placed on the stage 51. In the embodiment, one heating device 52 is provided at a position opposed with a clearance to the terminal flange 32 of the terminal 30, mainly induction-heating the terminal flange 32. The other heating device 62 is provided at a position opposed with a clearance to the outer surface 15B of the lid body 15, mainly induction-heating the lid body 15.

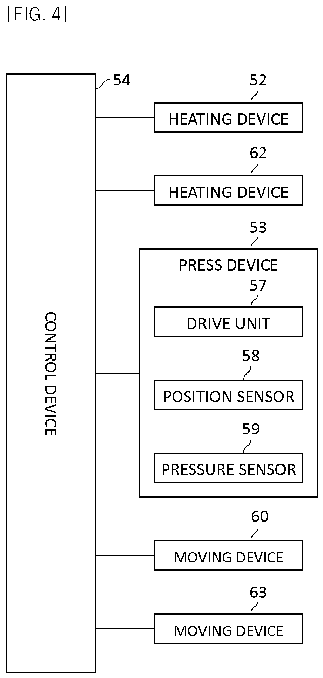

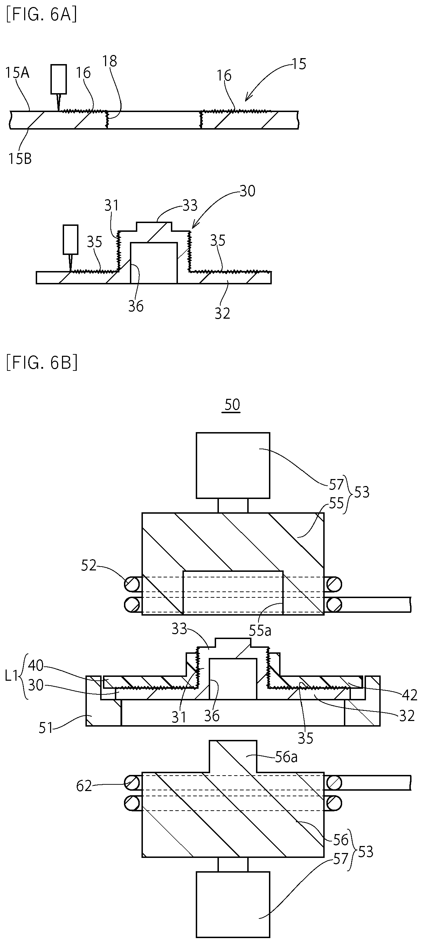

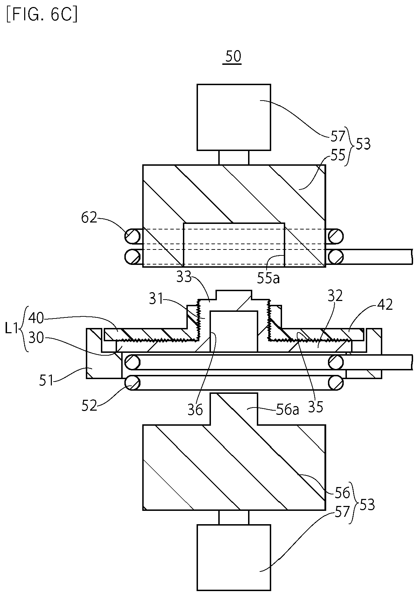

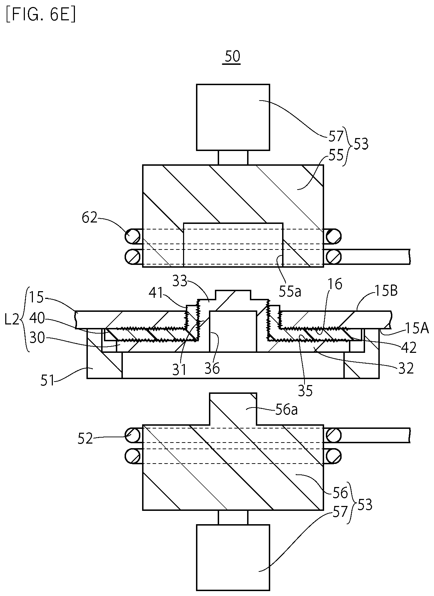

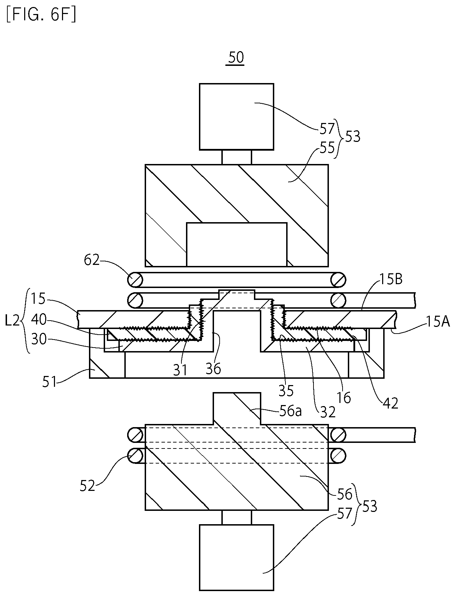

The heating device 52 is connected to a moving device 60, and the heating device 62 is connected to a moving device 63 (refer to FIG. 4), which are provided so as to move separately. The heating device 52 moves between a position apart from the stage 51 as shown in FIG. 6B and FIG. 6E, and a position close to one side (a lower side in the embodiment) of the stage 51 as shown in FIG. 6C. The heating device 62 moves between a position apart from the stage 51 as shown in FIG. 6B and FIG. 6E, and a position close to the other side (an upper side in the embodiment) of the stage 51 as shown in FIG. 6F.

The press device 53 includes a pair of pressure portions 55, 56, drive units 57, 57, a distance sensor 58, and a pressure sensor 59.

The pair of pressure portions 55, 56 are rod-shaped members formed of an insulator such as ceramic. The pair of pressure portions 55, 56 are inserted to hollow parts of the induction heating coils included in the heating devices 52, 62. The pair of pressure portions 55, 56 sandwich the laminated bodies L1, L2 placed on the stage 51.

Specifically, one pressure portion 55 is arranged opposed to the lid body 15. A recessed portion 55a is provided in one pressure portion 55 at a position opposed to the terminal mounting hole 18. When one pressure portion 55 approaches the outer surface 15B of the lid body 15, the cylindrical portion 41 of the insulating member 40 and the external connection portion 33 of the terminal 30 enters the recessed portion 55a. According to the above, one pressure portion 55 abuts on the outer surface 15B of the lid body 15 at the peripheral edge of the terminal mounting hole 18, and presses the lid body 15 against the insulating flange 42 of the insulating member 40.

The other pressure portion 56 is arranged opposed to the terminal flange 32 of the terminal 30. A protrusion 56a is provided in the other pressure portion 56 at a position opposed to the hollow portion 36 of the shaft portion 31. When the other pressure portion 56 approaches the terminal flange 32 of the terminal 30, the protrusion 56a is inserted from an opening of the hollow portion 36 of the shaft portion 31 and enters the hollow portion 36. According to the above, the other pressure portion 56 abuts on the terminal flange 32 at a peripheral edge of the shaft portion 31, and presses the terminal flange 32 against the insulating flange 42 of the insulating member 40.

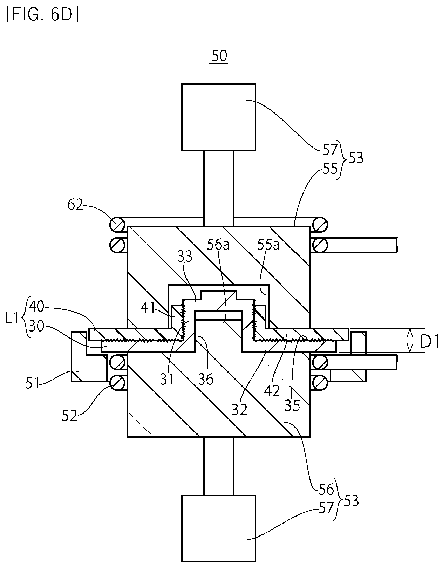

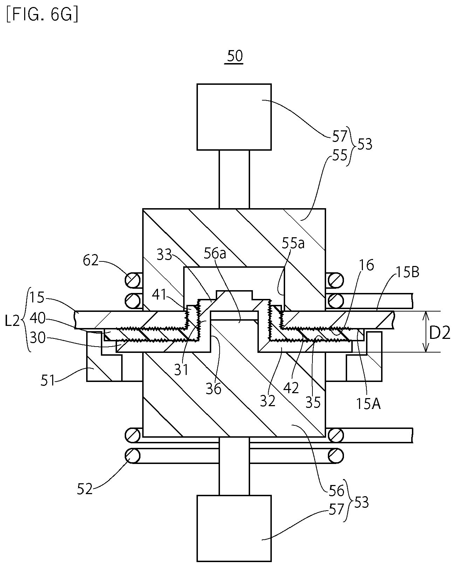

The drive units 57, 57 are provided with a pneumatic cylinder, a spring pressurizer, or the like controlled by an electropneumatic regulator. The drive units 57, 57 receive instructions from the control device 54, and the moving speed or positions are controlled. The drive units 57, 57 move the pair of pressure portions 55, 56 at positions apart from the laminated bodies L1, L2 placed on the stage 51 as shown in FIG. 6C to be close to the laminated bodies L1, L2 while synchronizing the pressure portions 55, 56, allowing the pair of pressure portions 55, 56 to abut on the laminated bodies L1, L2 as shown in FIG. 6D and FIG. 6G to pressure the insulating flange 42. The drive units 57, 57 also move the pair of pressure portions 55, 56 abutting on the laminated bodies L1, L2 to be apart from each other while synchronizing the pressure portions 55, 56 to thereby release the pressurization of the insulating flange 42.

The distance sensor 58 detects a distance between the pair of pressure portions 55, 56, namely, a distance between a surface where one pressure portion 55 abuts on the outer surface 15B of the lid body 15 and a surface where the other pressure portion 56 abuts on the terminal flange 32 of the terminal 30.

The pressure sensor 59 detects a pressure acting on the insulating flange 42 when the pair of pressure portions 55, 56 abut on the laminated bodies L1, L2 and pressure the insulating flange 42.

The control device 54 includes a computer, which is connected to the heating devices 52, 62, the press device 53, and the moving devices 60, 63 as shown in FIG. 4. The control device 54 controls operations of the heating devices 52, 62 and the press device 53 in accordance with detection results of the distance sensor 58 and the pressure sensor 59 or a predetermined program, thereby integrating the laminated bodies L1, L2 placed on the stage 51.

### (4) Lid Assembly Step

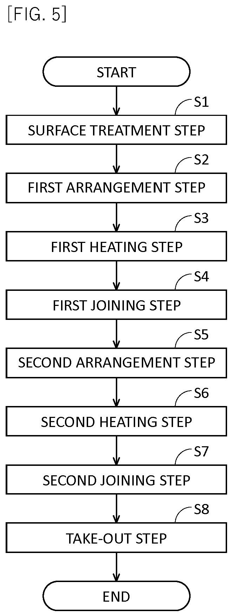

Next, the lid assembly step will be explained chiefly with reference to FIG. 5 and FIGS. 6A to 6G.

The lid assembly step includes, as shown in FIG. 5, a surface treatment step S1, a first arrangement step S2, a first heating step S3, a first joining step S4, a second arrangement step S5, a second heating step S6, a second joining step S7, and a take-out step S8.

In the surface treatment step S1, the treatment portion 16 to which surface treatment is performed is formed at the peripheral edge of the terminal mounting hole 18 on the inner surface 15A of the lid body 15 as shown in FIG. 6A. Moreover, the treatment portion 35 to which surface treatment is performed is formed at the surface of the terminal flange 32 on the surface opposed to the lid body 15. In this case, the treatment portions 16, 35 in which surfaces are roughened are formed by irradiating the lid body 15 and the terminal flange 32 with laser light; however, it is also possible to form the treatment portions 16, 35 by using various treatments described above such as surface roughening treatment, silane coupling treatment, treatment of attaching the heat fusion tape. Note that the treatment portion 16 can be formed on the inner peripheral surface of the terminal mounting hole 18, and the treatment portion 35 can be formed on the outer peripheral surface of the shaft portion 31 in the surface treatment step S1.

In the first arrangement step S2, the shaft portion 31 of the terminal 30 is inserted into the hollow part of the cylindrical portion 41 so that the treatment portion 35 provided on the terminal flange 32 contacts the insulating flange 42. According to the above, the laminated body L1 in which the insulating flange 42 is stacked on the terminal flange 32 is formed. Then, the heating devices 52, 62 and the pressure portions 55, 56 of the press device 53 are arranged at positions apart from the stage 51 as shown in FIG. 6B, and the laminated body L1 is placed on the stage 51 of the joining device 50 (refer to FIG. 6B).

Although the laminated body L1 is placed on the stage 51 after the terminal 30 and the insulating member 40 are allowed to overlap with each other to form the laminated body L1 in the embodiment, it is also possible that the terminal 30 is placed on the stage 51, then, the insulating member 40 is arranged so as to overlap with the terminal 30 to thereby place the laminated body L1 on the stage 51.

After the laminated body L1 is placed on the stage 51 and the first arrangement step S2 is completed, the first heating step S3 is started. In the first heating step S3, first, the heating device 52 at a position apart from the laminated body L1 placed on the stage 51 is moved to a place close to the laminated body L1 as shown in FIG. 6C.

After that, the driving power is supplied to the heating device 52 and magnetic fields are generated from the induction heating coils provided in the heating device 52, thereby heating the terminal flange 32 of the terminal 30 made of metal. According to the above, the insulating flange 42 stacked on the terminal 30 receives heat from the terminal flange 32 and is heated. At that time, the driving power to be supplied to the heating device 52, the position of the induction heating coils provided in the heating device 52, and the like are adjusted so that the insulating flange 42 is heated to a predetermined temperature T1.

Here, the predetermined temperature T1 is preferably a deflection temperature Tf under load or more that is obtained when a load of 1.8 Mpa is added to a thermoplastic resin forming the insulating member 40, and preferably a temperature lower than a temperature 10% higher than a melting point Tm of the thermoplastic resin forming the insulating member 40.

In the description, the melting point Tm of the thermoplastic resin is a value measured in compliance with JIS K7121 by using a differential scanning calorimeter with a temperature rising rate of 10°C per minute. Citing melting points of typical thermoplastic resins, PP is 168°C, nylon 66 is 265°C, PBT is 232 to 267°C, PPS is 280°C, and PFA is 300 to 310°C.

The deflection temperature Tf under load of the thermoplastic resin is a deflection temperature under load obtained when the load of 1.8 MPa is added, which is measured by a method in compliance with JIS K7191. Citing deflection temperatures Tf under load of typical thermoplastic resin which are obtained when the load of 1.8 MPa is added, PP is 57 to 65°C, nylon 66 is 66 to 68°C, PBT is 58°C, PPS is 105°C, and PFA is 50°C.

Then, when the insulating flange 42 reaches the predetermined temperature T1, the first joining step S4 is started. In the first joining step S4, the press device 53 moves the pair of pressure portions 55, 56 at the positions apart from the laminated body L1 placed on the stage 51 as shown in FIG. 6C to be close to the laminated body L1. Specifically, the control device 54 controls the drive units 57 to allow the pair of pressure portions 55, 56 to be close to each other so that a distance between the pair of pressure portions 55, 56 detected by the distance sensor 58 is a predetermined length D1. The above predetermined length D1 is set to a length a predetermined amount smaller than a sum of thicknesses of the terminal flange 32 and the insulating flange 42.

As shown in FIG. 6D, the pair of pressure portions 55, 56 sandwich the heated insulating flange 42 and the terminal flange 32 and presses the insulating flange 42 on the terminal flange 32. Accordingly, the terminal 30 is joined and fixed to the insulating member 40.

During execution of the first joining step S4, the driving power may be supplied to the heating device 52, or the supply of the driving power to the heating device 52 may be cut off.

The control device 54 may detect a pressure acting on the insulating flange 42 when the distance between the pair of pressure portions 55, 56 is the predetermined length D1 by the pressure sensor 59, may determine that the first joining step S4 has been normally performed when the detected pressure is within a predetermined range, and may determine that an abnormality has occurred in the first joining step S4 when the detected pressure is out of the predetermined range.

That is, when the detected value of the pressure sensor 59 is within the predetermined range, the control device 54 determines that the insulating flange 42 has been joined to the terminal flange 32 with a proper pressure while the insulating flange 42 keeps a predetermined shape, and determines that the first joining step S4 has been normally performed.

On the other hand, when the detected value of the pressure sensor 59 is out of the predetermined range, the control device 54 determines that the first joining step S4 has not been normally performed.

Specifically, when the detected value of the pressure sensor 59 is smaller than the predetermined range, the control device 54 determines that the insulating member 40 is thinner than a desired thickness and it is difficult to secure an insulation distance. When the detected value of the pressure sensor 59 is larger than the predetermined range, the control device 54 determines that the insulating member 40 has been deformed in an undesired manner as a pressure larger than a predetermined value has been acted on the heated insulating flange 42.

When the control device 54 determines that the first joining step S4 has not been normally performed, the control device 54 ends the lid assembly step without performing subsequent steps.

The control device 54, when determining that the first joining step S4 has been normally performed, arranges the heating devices 52, 62 and the pressure portions 55, 56 of the press device 53 at positions apart from the stage 51 as shown in FIG. 6E. Then, the cylindrical portion 41 in the laminated body L1 placed on the stage 51 is inserted into the terminal mounting hole 18 of the lid body 15. According to the above, the second arrangement step S5 is performed, in which the laminated body L2 formed by arranging the insulating member 40 between the lid body 15 and the terminal 30 is placed on the stage 51.

In the second arrangement step S5, the laminated body L2 may be placed on the stage 51 after the insulating member 40 to which the terminal 30 is joined is taken out from the stage 51 and the cylindrical portion 41 of the insulating member 40 is inserted into the terminal mounting hole 18 of the lid body 15 to form the laminated body L2.

When the laminated body L2 in which the insulating member 40 is arranged between the lid body 15 and the terminal 30 is placed on the stage 51, the second heating step S6 is started.

In the second heating step S6, the moving device 63 moves the heating device 62 located at a position apart from the laminated body L2 placed on the stage 51 to a place close to the lid body 15 included in the laminated body L2 as shown in FIG. 6F.

After that, the driving power is supplied to the heating device 62 to produce magnetic fields from the induction heating coils provided in the heating device 62, thereby heating the lid body 15 made of metal. According to the above, the insulating flange 42 overlapping with the lid body 15 receives heat from the lid body 15 and is heated. At that time, the driving power to be supplied to the heating device 62, the position of the induction heating coils provided in the heating device 52, and the like are adjusted so that the insulating flange 42 is heated to the predetermined temperature T1.

Then, when the insulating flange 42 reaches the predetermined temperature T1, the second joining step S7 is started. In the second joining step S7, the press device 53 moves the pair of pressure portions 55, 56 at positions apart from the laminated body L2 placed on the stage 51 as shown in FIG. 6F to be close to the laminated body L2.

Specifically, the control device 54 controls the drive units 57 to allow the pair of pressure portions 55, 56 to be close to each other so that a distance between the pair of pressure portions 55, 56 detected by the distance sensor 58 is a predetermined length D2. The above predetermined length D2 is set to a length a predetermined amount smaller than a sum of thicknesses of the lid body 15, the terminal flange 32, and the insulating flange 42 (a thickness of the sealed container lid 19).

As shown in FIG. 6G, the pair of pressure portions 55, 56 sandwich the heated insulating flange 42 and the treatment portion 16 of the lid body 15 and presses the insulating flange 42 on the lid body 15. According to the above, the lid body 15 is joined and fixed to the insulating flange 42 of the insulating member 40 to thereby form the sealed container lid 19 in which the lid body 15, the terminal 30, and the insulating member 40 are integrated.

During execution of the second joining step S7, the driving power may be supplied to the heating device 62, or the supply of the driving power to the heating device 62 may be cut off.

The control device 54 may detect a pressure acting on the insulating flange 42 when the distance between the pair of pressure portions 55, 56 is the predetermined length D2 by the pressure sensor 59, may determine that the joining step has been normally performed when the detected pressure is within a predetermined range, and may determine that an abnormality has occurred in the joining step when the detected pressure is out of the predetermined range.

That is, when the detected value of the pressure sensor 59 is within the predetermined range, the control device 54 determines that the insulating flange 42 has been joined to the terminal flange 32 with a proper pressure while the insulating flange 42 keeps a predetermined shape, and determines that the first joining step S4 has been normally performed. On the other hand, when the detected value of the pressure sensor 59 is smaller than the predetermined range, the control device 54 determines that the insulating member 40 is thinner than a desired thickness and it is difficult to secure an insulation distance. When the detected value of the pressure sensor 59 is larger than the predetermined range, the control device 54 determines that the insulating member 40 has been deformed in an undesired manner as a pressure larger than a predetermined value has been acted on the heated insulating flange 42.

Then, when the second joining step S7 is completed, the take-out step S8 is performed. In the take-out step S8, the heating device 52 and the pair of pressure portions 55, 56 are separated from the sealed container lid 19 in which the lid body 15, the terminal 30, and the insulating member 40 are integrated, then, the sealed container lid 19 is taken out from the stage 51.

In the take-out step S8, the pair of pressure portions 55, 56 may be separated from the sealed container lid 19 just after the integrated sealed container lid 19 is formed. It is also preferable that the sealed container lid 19 is continuously pressured until the integrated sealed container lid 19 is cooled to a glass transition temperature Tg or less of the thermoplastic resin forming the insulating member 40, and that the pair of pressure portions 55, 56 are separated from the sealed container lid 19 after the sealed container lid 19 reaches the glass transition temperature Tg.

### (5) Advantageous Effects

The heated insulating flange 42 is pressed on the lid body 15 or the terminal flange 32 to be joined thereto in the embodiment; therefore, the insulating member 40 can be in intimate contact with the lid body 15 and the terminal 30, and high sealing properties can be obtained.

Moreover, the insulating flange 42 is pressured by the lid body 15 and the terminal flange 32 after the insulating flange 42 is heated to the predetermined temperature T1 in the embodiment; therefore, the resin which is melted or softened in the heating step on a surface part of the insulating flange 42 is hardly pushed out from an interface between the insulating flange 42 and the lid body 15 or an interface between the insulating flange 42 and the terminal flange 32. Accordingly, it is possible to dispose the melted or softened resin on the interface to join between the insulating flange 42 and the lid body 15 or between the insulating flange 42 and the terminal flange 32, as a result, high sealing properties and high joining strength can be obtained.

The insulating flange 42 is pressured by the lid body 15 and the terminal flange 32 after the insulating flange 42 is heated to the predetermined temperature T1 in the embodiment; therefore, it is possible to suppress deformation of the insulating flange 42 and to secure the insulation distance between the lid body 15 and the terminal flange 32.

A mold for injection molding is required for providing the insulating member between the lid body and the terminal by injection molding; however, in the embodiment, such mold is not required and it is possible to deal with small-lot production.

When opening/closing of the mold for injection molding is repeated in the case where the insulating member is provided between the lid body and the terminal by injection molding, there is a danger that metal powder generated by friction between molds is mixed to an injection molding resin to deteriorate insulation resistance of the insulating member; however, metal powder generated from the mold is not mixed to the insulating member 40 in the embodiment and there is no danger of deterioration of insulation resistance.

In the embodiment, when the pair of pressure portions 55, 56 sandwich the laminated body L1 or the laminated body L2 placed on the stage 51 in the first joining step S4 or the second joining step S7, the protrusion 56a provided in the pressure portion 56 is inserted into the hollow portion 36 provided in the shaft portion 31 of the terminal 30 to thereby position the laminated body L1 with respect to the pair of pressure portions 55, 56. Therefore, desired positions of the laminated bodies L1, L2 can be pressured by the pressure portions 55, 56, and the insulating member 40 can be in intimate contact with the lid body 15 and the terminal 30 more positively.

In the embodiment, the lid body 15 and the terminal 30 are heated by induction heating in the first heating step S3 and the second heating step S6, and the insulating flange 42 is heated by heat conduction or radiation from the lid body 15 and the terminal flange 32. Therefore, a desired place of the insulating member 40 on the interface with respect to the lid body 15 or the terminal flange 32 can be locally heated, and the insulating member 40 can be in intimate contact with the lid body 15 and the terminal 30 while suppressing excessive deformation of the insulating member 40.

In the embodiment, the end of the cylindrical portion 41 of the insulating member 40 is on the same plane as the outer surface 15B of the lid body 15, or protrudes to the outer side than the outer surface 15B of the lid body 15; therefore, the edge portion 18a of the terminal mounting hole 18 on the outer surface 17 side is not exposed.

In the embodiment, the pressure acting on the insulating flange 42 when the distance between the pair of pressure portions 55, 56 is predetermined lengths D1, D2 is detected in the first joining step S4 and the second joining step S7; therefore, it is possible to easily determine whether the insulating member 40 has been normally joined to the lid body 15 and the terminal 30 or not.

In the embodiment, the insulating flange 42 contacts the treatment portion 16 provided on the inner surface 15A of the lid body 15 and treatment portion 35 provided on the terminal flange 32 of the terminal 30; therefore, the insulating flange 42 can be firmly joined to the lid body 15 and the terminal 30, which increases airtightness and liquid tightness. In particular, when the treatment portions 16, 35 are formed by laser processing treatment as in the embodiment, airtightness and liquid tightness can be further increased.

### (6) Modification Examples

Modification examples of the above embodiment will be explained. Any one of the plurality of modification examples to be explained below may be applied or two or more of modification examples to be explained below may be combined and applied to the embodiment. Various modifications can be also made in addition to the following modification examples.

### (6-1) Modification Example 1

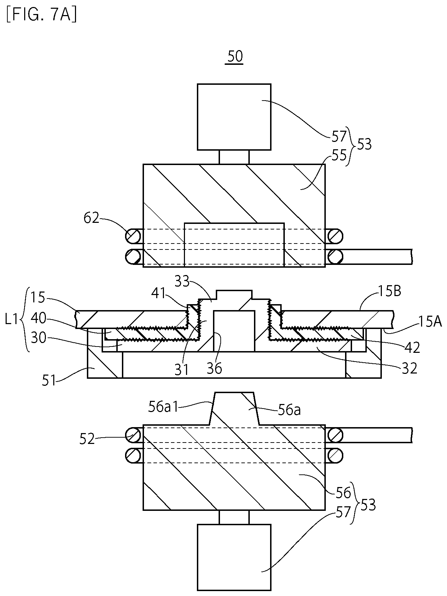

It is preferable that the protrusion 56a provided in the other pressure portion 56 of the press device 53 is formed to have a tapered shape as shown in FIG. 7A, and that an outer peripheral surface 56a1 of the protrusion 56a presses the shaft portion 31 onto the inner peripheral surface of the terminal mounting hole 18 in the lid body 15 as the protrusion 56a is inserted deeper in the hollow portion 36 of the shaft portion 31 of the terminal 30, thereby pressure the cylindrical portion 41 of the insulating member 40 by the shaft portion 31 and the terminal mounting hole 18.

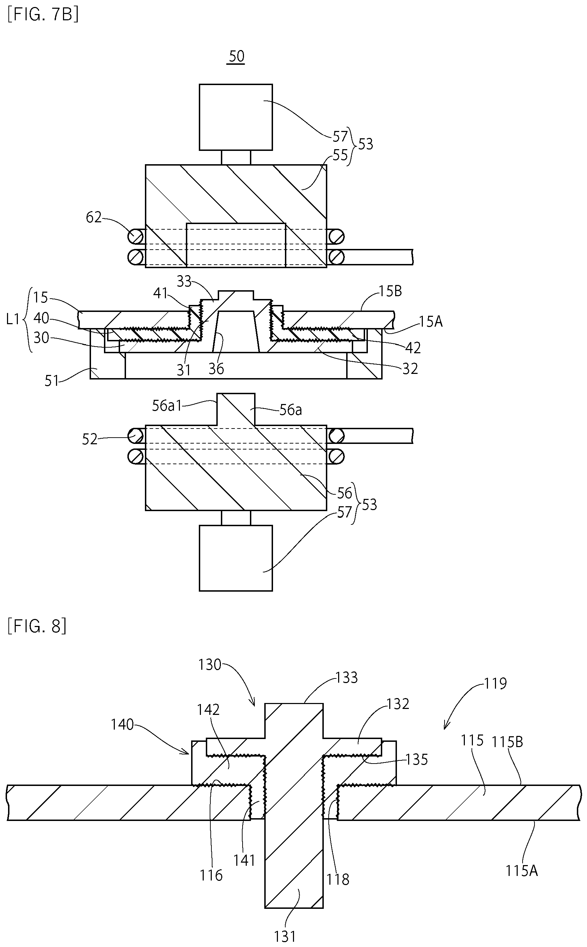

It is also preferable, as shown in FIG. 7B, that the hollow portion 36 of the shaft portion 31 is formed to have a tapered shape in which a diameter becomes large as coming close to an opening end, and that the outer peripheral surface 56a1 of the protrusion 56a presses the shaft portion 31 onto the inner peripheral surface of the terminal mounting hole 18 in the lid body 15 as the protrusion 56a is inserted deeper in the hollow portion 36 of the shaft portion 31, thereby pressure the cylindrical portion 41 of the insulating member 40 by the shaft portion 31 and the terminal mounting hole 18.

When the protrusion 56a is formed to have the tapered shape as shown in FIG. 7A, or the hollow portion 36 of the shaft portion 31 is formed to have the tapered shape in which the diameter becomes large as coming close to the opening end as shown in FIG. 7B, the protrusion 56a presses the shaft portion 31 on the cylindrical portion 41 of the insulating member 40 when the protrusion 56a is inserted into the hollow portion 36 of the shaft portion 31 in the first joining step S4 or the second joining step S7. Therefore, not only the inner surface 15A of the lid body 15 and the terminal flange 32 are joined by the insulating flange 42 but also the inner peripheral surface of the terminal mounting hole 18 and the shaft portion 31 of the terminal 30 are joined by the cylindrical portion 41 of the insulating member 40, thereby obtaining higher sealing properties.

### (6-2) Modification Example 2

In the above embodiment, after the first heating step S3 and the first joining step S4 are performed, the second heating step S6 and the second joining step S7 are performed to manufacture the sealed container lid 19; however, it is also preferable that, after the second heating step S6 and the second joining step S7 are performed, the first heating step S3 and the first joining step S4 are performed to manufacture sealed container lid 19. That is, it is preferable that, after the lid body 15 is heated and the lid body 15 is joined to the insulating flange 42, the terminal flange 32 is heated and the terminal flange 32 is joined to the insulating flange 42 to manufacture the sealed container lid 19.

### (6-3) Modification Example 3

In the above embodiment, the terminal flange 32 is induction-heated by one heating device 52 arranged close to the terminal flange 32 side of the laminated body L1 in the first heating step S3; however, the terminal flange 32 may be induction-heated by the other heating device 62 arranged close to the insulating flange 42 side of the laminated body L1, or the terminal flange 32 may be induction-heated by the heating devices 52, 62 arranged close to both sides of the laminated body L1.

Moreover, the lid body 15 is induction-heated by one heating device 62 arranged close to the lid body 15 side of the laminated body L1 in the second heating step S6; however, the terminal flange 32 may be induction-heated by the other heating device 52 arranged close to the terminal flange 32 side of the laminated body L2, or the lid body 15 may be induction-heated by the heating devices 52, 62 arranged close to both sides of the laminated body L2.

### (6-4) Modification Example 4

In the above embodiment, the method for manufacturing the sealed container lid 19 in which the terminal flange 32 of the terminal 30 is provided on the inner surface 15A of the lid body 15 through the insulating flange 42 of the insulating member 40 has been explained. The same method as the first embodiment can be applied to a sealed container lid 119 in which a terminal flange 132 of a terminal 130 is provided on an outer surface 115B of a lid body 115 through an insulating flange 142 of an insulating member 140 as shown in FIG. 8.

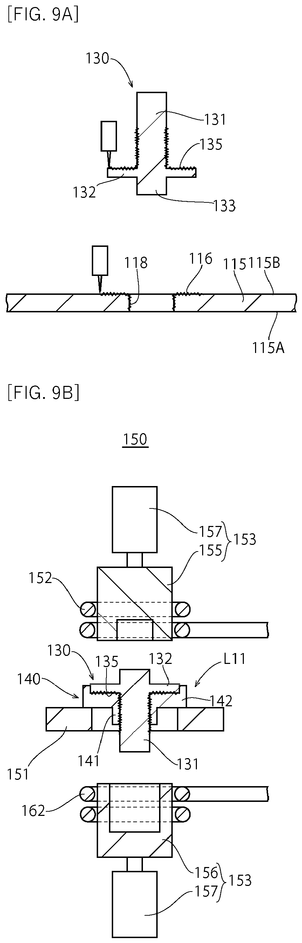

Specifically, in the surface treatment step S1, a peripheral edge of a terminal mounting hole 118 on the outer surface 115B of the lid body 115 is irradiated with laser light to form a treatment portion 116 as shown in FIG. 9A. Moreover, a surface of the terminal flange 132 of the terminal 130 opposed to the lid body 115 is irradiated with laser light to form a treatment portion 135. Note that the treatment portion 116 can be formed on an inner peripheral surface of the terminal mounting hole 118, and the treatment portion 135 can be formed on an outer peripheral surface of the shaft portion 131 of the terminal 130 in the surface treatment step S1.

In the first arrangement step S2, the shaft portion 131 of the terminal 130 is inserted into a hollow part of a cylindrical portion 141 so that the treatment portion 135 provided on the terminal flange 132 contacts the insulating flange 142. According to the above, a laminated body L11 in which the insulating flange 142 is allowed to overlap with the terminal flange 132 is formed. Then, the laminated body L11 is placed on a stage 151 of a joining device 150 as shown in FIG. 9B.

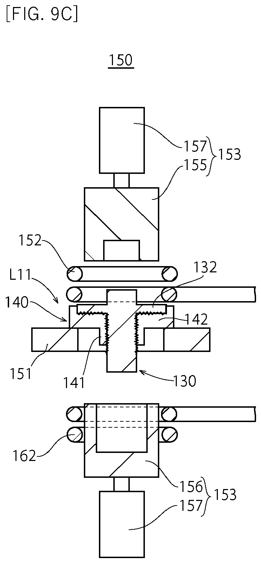

After the laminated body L11 is placed on the stage 151 and the first arrangement step S2 is completed, the first heating step S3 is started. In the first heating step S3, the control device 54 moves a heating device 152 at a position apart from the laminated body L11 placed on the stage 51 to a place close to the laminated body L11 as shown in FIG. 9C.

After that, the control device 54 supplies the driving power to the heating device 52 to produce magnetic fields from induction heating coils provided in the heating device 152, thereby heating the terminal flange 132 of the terminal 130 made of metal. According to the above, the insulating flange 42 stacked on the terminal 30 is heated by heat from the terminal flange 32.

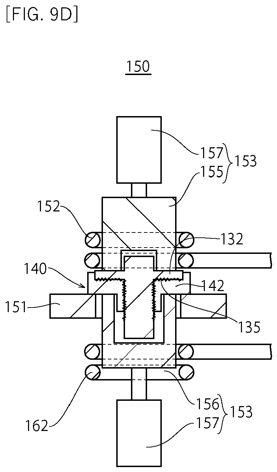

Then, when the insulating flange 142 reaches the predetermined temperature T1, the first joining step S4 is performed. The control device 54 allows a pair of pressure portions 155, 156 to be close to each other so that a distance between the pair of pressure portions 155, 156 detected by the distance sensor 58 is a predetermined length. Accordingly, the laminated body L11 is sandwiched by the pair of pressure portions 155, 156, the insulating flange 142 is pressed on a place where the treatment portion 135 is provided in the terminal flange 132, and the terminal 130 is joined and fixed to the insulating member 140 as shown in FIG. 9D. The control device 54 also detects a pressure acting on the insulating flange 42 when a distance between the pair of pressure portions 55, 56 is the predetermined length by the pressure sensor 59.

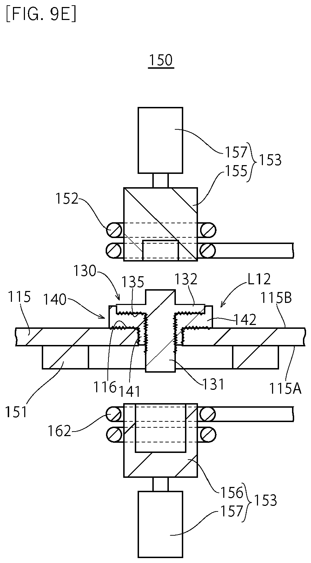

Then, when the control device 54 determines that the pressure acting on the insulating flange 42 detected by the pressure sensor 59 in the first joining step S4 is within a predetermined range and that the first joining step S4 has been normally performed, the control device 54 executes the second arrangement step S5. In the second arrangement step S5, the heating devices 52, 62 and the pressure portions 55, 56 of a press device 53 are arranged at positions apart from the stage 51, then, the laminated body L12 in which the cylindrical portion 141 in the laminated body L11 is inserted into the terminal mounting hole 118 of the lid body 115 is placed on the stage 151 as shown in FIG. 9E.

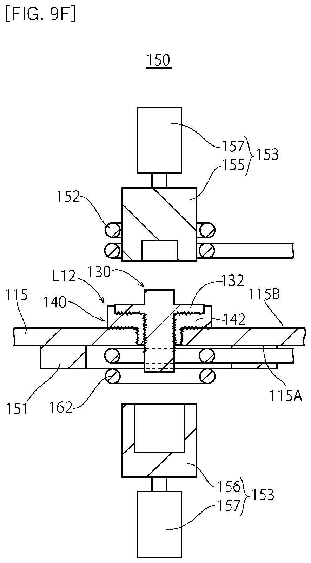

After the second arrangement step S5 is completed, the second heating step S6 is started. In the second heating step S6, the control device 54 moves a heating device 162 to a place close to the lid body 115 in the laminated body L12 placed on the stage 151 as shown in FIG. 9F. After that, the control device 54 supplies the driving power to the heating device 62 to produce magnetic fields from the induction heating coils provided in the heating device 62, thereby heating the lid body 15 made of metal. According to the above, the insulating flange 42 receives heat from the lid body 15 and is heated.

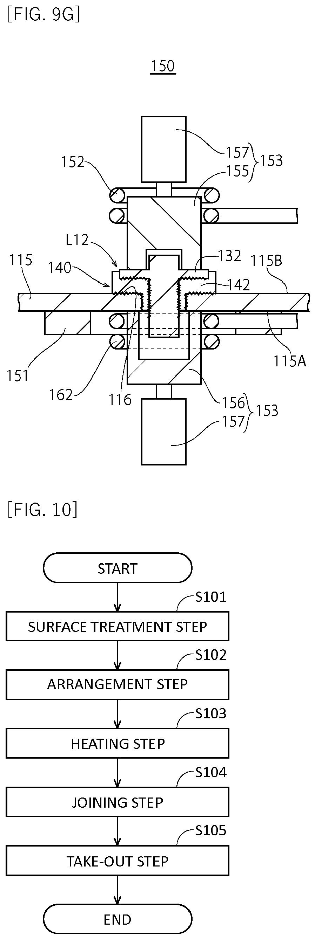

Then, when the insulating flange 42 reaches the predetermined temperature T1, the second joining step S7 is performed. The control device 54 controls drive units 157 to allow the pair of pressure portions 155, 156 to be close to each other so that a distance between the pair of pressure portions 155, 156 detected by the distance sensor 58 is a predetermined length, and the laminated body L12 is sandwiched by the pair of pressure portions 155, 156 as shown in FIG. 9G. Accordingly, the insulating flange 142 is pressed on a place where the treatment portion 116 is provided in the lid body 115, the lid body 115 is joined and fixed to the insulating member 140 to thereby form the sealed container lid 119 in which the lid body 115, the terminal 130, and the insulating member 140 are integrated.

Then, when the second joining step S7 is completed, the heating device 52 and the pair of pressure portions 55, 56 are separated from the sealed container lid 119 in which the lid body 115, the terminal 130, and the insulating member 140 are integrated, then, the sealed container lid 119 is taken out from the stage 51.

### (Second Embodiment)

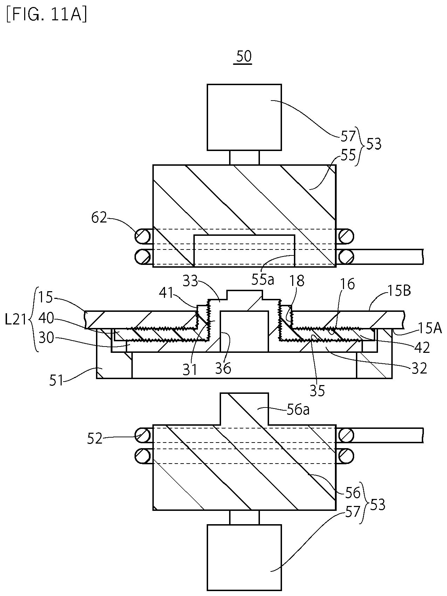

Hereinafter, a second embodiment of the present invention will be explained with reference to FIG. 10, and FIGS. 11A to 11D.

The second embodiment differs from the first embodiment in a point that, as shown in FIG. 10, a lid assembly step includes a surface treatment step S101, an arrangement step S102, a heating step S103, a joining step S104, and a take-out step S105, in which the pair of pressure portions 55, 56 sandwich the lid body 15, the insulating flange 42, and the terminal flange 32 in a state where the insulating flange 42 is arranged between the lid body 15 and the terminal flange 32, and the lid body 15 and the terminal flange 32 are joined to the insulating flange 42 by one heating step and one joining step.

Specifically, first, the treatment portion 16 is formed in the lid body 15, and the treatment portion 35 is formed in the terminal 30 in the same method as the first embodiment in the surface treatment step S101.

Then, in the arrangement step S102, the cylindrical portion 41 of the insulating member 40 is inserted into the terminal mounting hole 18 of the lid body 15 from the inner surface 15A side to allow the treatment portion 16 provided on the inner surface 15A of the lid body 15 to contact the insulating flange 42. Moreover, the shaft portion 31 of the terminal 30 is inserted into the hollow part of the cylindrical portion 41 so that the treatment portion 35 provided in the terminal flange 32 contact the insulating flange 42. According to the above, a laminated body L21 in which the insulating member 40 is arranged between the lid body 15 and the terminal 30 is formed. Then, the laminated body L21 is placed on the stage 51 of the joining device 50 as shown in FIG. 11A.

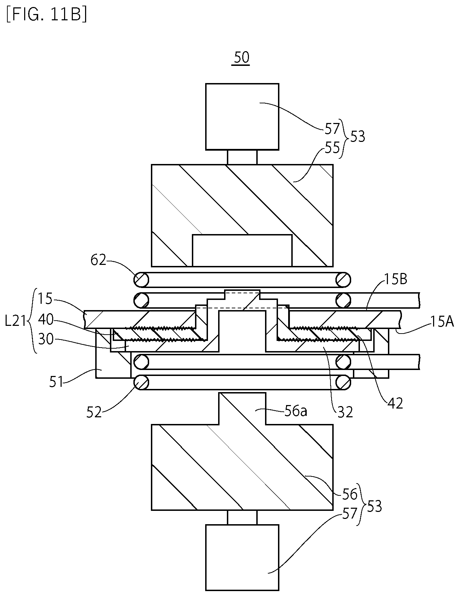

When the arrangement step S102 is completed, the heating devices 52, 62 at positions apart from the laminated body L21 placed on the stage 51 are moved so as to be close to the laminated body L21 as shown in FIG. 11B to perform the heating step S103. That is, the moving device 60 moves one heating device 62 so as to be close to the outer surface 15B of the lid body 15 and moves the other heating device 52 so as to be close to the terminal flange 32 of the terminal 30.

After that, the control device 54 supplies the driving power to the heating devices 52, 62 to produce magnetic fields from the induction heating coils provided in the heating devices 52, 62, thereby heating the lid body 15 and the terminal flange 32 of the terminal 30 which are made of metal. According to the above, the insulating flange 42 sandwiched between the lid body 15 and the terminal flange 32 of the terminal 30 is heated to be the predetermined temperature T1 by heat conduction from the lid body 15 and the terminal flange 32.

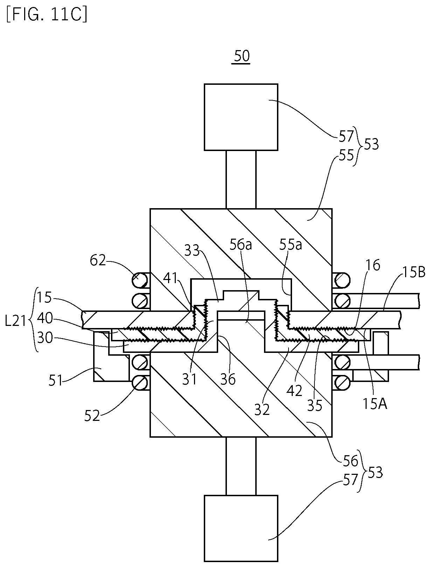

Then, when the insulating flange 42 reaches the predetermined temperature T1, the joining step S104 is performed. The control device 54 controls drive units 57 to allow the pair of pressure portions 55, 56 to be close to each other so that a distance between the pair of pressure portions 55, 56 detected by the distance sensor 58 is a predetermined length, and the laminated body L21 is sandwiched by the pair of pressure portions 55, 56 as shown in FIG. 11C. According to the above, the insulating flange 42 is pressed against a place where the treatment portion 16 is provided in the lid body 15, the insulating flange 42 is pressed to a place where the treatment portion 35 is provided in the terminal flange 32, and the lid body 15 and the terminal 30 are joined and fixed to the insulating member 40 to thereby form the sealed container lid 19.

The control device 54 may detect a pressure acting on the insulating flange 42 when the distance between the pair of pressure portions 55, 56 is the predetermined length by the pressure sensor 59, may determine that the heating step has been normally performed when the detected pressure is within a predetermined range, and may determine that an abnormality has occurred in the heating step when the detected pressure is out of the predetermined range also in this embodiment.

Then, when the joining step S104 is completed, the heating device 52 and the pair of pressure portions 55, 56 are separated from the sealed container lid 119, then, the take-out step S105 in which the sealed container lid 119 is taken out from the stage 51 is performed.

In the embodiment, the lid body 15 and the terminal flange 32 can be joined to the insulating flange 42 by one heating step and one joining step; therefore, manufacturing man-hours can be reduced.

Other operations and effects are the same as the first embodiment, and the detailed explanation is omitted.

In the embodiment, the method for manufacturing the sealed container lid 19 in which the terminal flange 32 of the terminal 30 is provided on the inner surface 15A of the lid body 15 through the insulating flange 42 of the insulating member 40 has been explained. The sealed container lid 119, shown in FIG. 8, in which the terminal flange 132 of the terminal 130 is provided on the outer surface 115B of the lid body 115 through the insulating flange 142 of the insulating member 140 can be also manufactured by one heating step and one joining step in the same manner as the above embodiment.

### Reference Signs List

10: sealed container
11: case body
12: opening
15: lid body
15A: inner surface
15B: outer surface
16: treatment portion
18: terminal mounting hole
18a: edge portion
19: lid assembly
20: electrode body
30: terminal
31: shaft portion
32: terminal flange
33: external connection portion
34: connection portion
35: treatment portion
36: hollow portion
40: insulating member
41: cylindrical portion
42: insulating flange
50: joining device
51: stage
52: heating device
53: press device
54: control device
55: pressure portion
55a: recessed portion
56: pressure portion
56a: protrusion
57: drive unit
58: position sensor
59: pressure sensor
60: moving device
62: heating device
63: moving device

## Claims

1. A method for manufacturing a sealed container lid that includes a conductive lid body having a terminal mounting hole, a conductive terminal having a shaft portion inserted into the terminal mounting hole, and a terminal flange protruding from an outer peripheral surface of the shaft portion, and an insulating member formed of an insulating thermoplastic resin and having a cylindrical portion into which the terminal is inserted, and an insulating flange protruding from an outer peripheral surface of the cylindrical portion and sandwiched between the lid body and the terminal flange, the method comprising:
a first arrangement step of arranging the insulating flange so as to overlap with the terminal flange;
a first heating step of heating the insulating flange overlapping with the terminal flange;
a first joining step of, after heating the insulating flange, pressing the insulating flange on the terminal flange in a state where a pair of pressure portions sandwich the terminal flange and the heated insulating flange, and joining the insulating flange to the terminal flange;
a second arrangement step of arranging the insulating flange so as to overlap with the lid body;
a second heating step of heating the insulating flange overlapping with the lid body; and
a second joining step of, after heating the insulating flange, pressing the insulating flange on the lid body in a state where the pair of pressure portions sandwich the lid body and the heated insulating flange, and joining the insulating flange to the lid body.

2. The method for manufacturing the sealed container lid according to claim 1,
wherein the insulating flange is heated by heating the terminal flange in the first heating step, and
the insulating flange is heated by heating the lid body in the second heating step.

3. The method for manufacturing the sealed container lid according to claim 2,
wherein the lid body and the terminal flange are heated by induction heating.

4. The method for manufacturing the sealed container lid according to claim 1,
wherein, in the first joining step, the pair of pressure portions are moved to be close to each other so that a distance between the pair of pressure portions is a predetermined length, the terminal flange and the insulating flange are sandwiched by the pair of pressure portions, and a pressure acting on the insulating flange at that time is measured.

5. The method for manufacturing the sealed container lid according to claim 1,
wherein, in the second joining step, the pair of pressure portions are moved to be close to each other so that a distance between the pair of pressure portions is a predetermined length, the lid body and the insulating flange are sandwiched by the pair of pressure portions, and a pressure acting on the insulating flange at that time is measured.

6. The method for manufacturing the sealed container lid according to claim 1,
wherein the shaft portion has a hollow portion opening to one end in an axial direction, and
the pair of pressure portions are moved to be close to each other, a protrusion provided in one of the pair of pressure portions is inserted into the hollow portion from the opening to press the shaft portion onto an inner peripheral surface of the terminal mounting hole, and the cylindrical portion is pressured by the shaft portion and the terminal mounting hole in the first joining step.

7. The method for manufacturing the sealed container lid according to claim 6,
wherein the protrusion has a tapered shape, and,
when the protrusion is inserted into the hollow portion from the opening, the protrusion presses the shaft portion on the inner peripheral surface of the terminal mounting hole.

8. The method for manufacturing the sealed container lid according to claim 6,
wherein the inner peripheral surface of the hollow portion has a tapered shape in which a diameter becomes large as coming close to an opening end, and,
when the protrusion is inserted into the hollow portion from the opening, the protrusion presses the shaft portion on the inner peripheral surface of the terminal mounting hole.

9. The method for manufacturing the sealed container lid according to claim 1,
wherein a tip end of the cylindrical portion is on the same plane as an outer surface of the lid body or protrudes to an outer side than the outer surface of the lid body.

10. A method for manufacturing a sealed container lid that includes a conductive lid body having a terminal mounting hole, a conductive terminal having a shaft portion inserted into the terminal mounting hole, and a terminal flange protruding from an outer peripheral surface of the shaft portion, and an insulating member formed of an insulating thermoplastic resin and having a cylindrical portion into which the terminal is inserted, and an insulating flange protruding from an outer peripheral surface of the cylindrical portion and sandwiched between the lid body and the terminal flange, the method comprising:
an arrangement step of arranging the insulating flange between the lid body and the terminal flange;
a heating step of heating the insulating flange arranged between the lid body and the terminal flange; and
a joining step of, after heating the insulating flange, joining the lid body and the terminal flange to the insulating flange in a state where a pair of pressure portions sandwich the lid body, the heated insulating flange, and the terminal flange, and fixing the terminal to the lid body.
